# EUROPÄISCHE PATENTSCHRIFT

(11) **EP 2 464 949 B1**
(45) Veröffentlichungstag und Bekanntmachung des Hinweises auf die Patenterteilung: **19.06.2013**
(21) Anmeldenummer: 09777816.1
(22) Anmeldetag: 11.08.2009
(51) Int. Cl.: G01F 1/84

(54) **CORIOLIS-MASSENDURCHFLUSSMESSGERÄT MIT OPTISCHEN SCHWINGUNGSAUFNEHMERN**
CORIOLIS MASS FLOWMETER WITH OPTICAL VIBRATION DETECTORS
DEBITMETRE A EFFET CORIOLIS COMPRENANT DES DETECTEURS DE VIBRATION DU TYPE OPTIQUE

(43) Veröffentlichungstag der Anmeldung: 20.06.2012
(73) Patentinhaber: Siemens Aktiengesellschaft, 80333 München (DE)
(72) Erfinder: EGNER, Daniel, 74653 Ingelfingen (DE); SCHORB, Herbert, 76199 Karlsruhe (DE); VON DOSKY, Stefan, 76149 Karlsruhe (DE)
(86) Internationale Anmeldenummer: PCT/EP2009/005829
(87) Internationale Veröffentlichungsnummer: WO 2011/018098

(56) Entgegenhaltungen:
- US-A- 4 949 583
- US-A- 5 020 380

## Beschreibung

Die Erfindung betrifft ein Coriolis-Massendurchflussmessgerät mit mindestens einem Messrohr, welches von einem Medium durchströmt wird, gemäß dem Oberbegriff des Anspruchs 1. Derartige Massendurchflussmessgeräte sind insbesondere als Feldgeräte zur Prozessinstrumentierung einsetzbar.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Füllstand, Massendurchfluss, Dichte oder Gaskonzentration eines Mediums. Durch Stellglieder kann der Prozessablauf in Abhängigkeit von erfassten Prozessvariablen entsprechend einer beispielsweise von einer Leitstation vorgegebenen Strategie beeinflusst werden. Als Beispiele für Stellglieder seien ein Regelventil, eine Heizung oder eine Pumpe genannt. Insbesondere in verfahrenstechnischen Anlagen stellen Messumformer für den Massendurchfluss wesentliche sensorische Komponenten dar. Im Hinblick auf ein optimales Anlagenverhalten und eine dauerhaft hohe Produktqualität sind qualitativ hochwertige Messumformer notwendig, die auch unter extremen Bedingungen langzeitstabile und wenig fehlerbehaftete Messwerte liefern.

Coriolis-Massendurchflussmessgeräte weisen im Allgemeinen ein einziges Messrohr oder eine Anzahl, zum Beispiel ein Paar, von Messrohren auf, durch das bzw. die ein Medium, zum Beispiel ein Fluid, strömt, dessen Massendurchfluss bestimmt werden soll. Däbei sind unterschiedliche Anordnungen und Geometrien der Messrohre bekannt.

Es gibt zum Beispiel Coriolis-Massendurchflussmessgeräte mit einem einzigen geraden Messrohr sowie Coriolis-Massendurchflussmessgeräte mit zwei gekrümmten, parallel zueinander verlaufenden Messrohren. Letztere, paarweise identisch ausgeführte Messrohre werden durch eine im mittleren Bereich platzierte Erregeranordnung zur Erzielung eines Massenausgleichs so zum Schwingen angeregt, dass sie gegeneinander schwingen, das heißt, dass die Schwingungen der beiden Messrohre um 180° gegeneinander phasenversetzt sind. Die Lage des Massenmittelpunkts des aus den beiden Messrohren gebildeten Systems bleibt dabei im Wesentlichen konstant und auftretende Kräfte werden weitgehend kompensiert. Das hat als positive Konsequenz, dass das schwingende System kaum nach außen als solches wirksam wird. Vor und hinter der Erregeranordnung werden Schwingungsaufnehmer angebracht, zwischen deren Ausgangssignalen bei einer Strömung eine Phasendifferenz entsteht. Diese wird durch die bei einer Strömung herrschenden Coriolis-Kräfte und damit durch den Massendurchfluss verursacht. Die Dichte des Mediums beeinflusst die Resonanzfrequenz des Schwingungssystems. Damit kann neben dem Massendurchfluss unter anderem auch die Dichte des strömenden Mediums bestimmt werden.

Aus der EP 0 874 975 B1 ist ein Coriolis-Massendurchflussmessgerät bekannt, bei welchem so genannte Tauchspulen als Schwingungsaufnehmer eingesetzt werden. Dazu ist eine Spule an einem Rahmen des Messgeräts und ein Magnet an einem Messrohr befestigt. Bei Schwingungen des Messrohrs verändert sich die Eintauchtiefe des Magnets in die Spule und es wird eine Spannung als Messsignal in die Spule induziert. Durch die Messrohrschwingungen und den Massenstrom werden an den Schwingungsaufnehmern zwei im Wesentlichen sinusförmige Signale erzeugt, die eine geringe Phasenverschiebung gegeneinander aufweisen. Eine Auswerteeinrichtung bestimmt die jeweilige Phasendifferenz und berechnet daraus den Massendurchfluss. Besonders in rauer Umgebung können elektromagnetische Störfelder das Messsignal verfälschen und damit die Messung beeinflussen. Den Messsignalen überlagerte Störungen erschweren die Berechnung genauer Messwerte.

Ein weiteres Problem stellt der Wunsch nach kleineren Coriolis-Massendurchflussmessgeräten dar. Je kürzer das schwingende Messrohr ausgeführt wird und je weniger es gebogen ist, desto geringer ist nämlich der Druckverlust eines das Messgerät durchströmenden Mediums. Gleichzeitig verringert sich jedoch ebenfalls die Schwingungsamplitude des Messrohrs und es werden daher Schwingungsaufnehmer benötigt, die eine höhere Messwertauflösung mit gleichzeitig geringerer Standardabweichung der Messwerte ermöglichen.

Als Alternative zu den bekannten Tauchspulen wurden bereits vielfältige optische Schwingungsaufnehmer beschrieben. Beispielsweise aus der EP 1 700 086 A2 ist ein Schwingungsaufnehmer für ein Coriolis-Massendurchflussmessgerät bekannt, der aus optischem Emitter, Kollektor und einer so genannten Light Pipe besteht. Der offene Querschnitt der Light Pipe und damit auch der transmittierte Lichtstrom werden wie eine optische Blende entsprechend den Schwingungen des Messrohrs verändert. Dabei wird eine lineare Abhängigkeit des empfangenen Lichtstroms von der Lage des Messrohrs angestrebt. Die US-PS 5,020,380 zeigt einen Schwingungsaufnehmer mit Emitter, Faser und Kollektor. Dabei wird die Intensität des transmittierten oder reflektierten Lichtes mit den Rohrschwingungen verändert. Ein weiterer Aufbau eines Schwingungsaufnehmers mit Emitter, Faser und Kollektor ist in der US-PS 5,038,620 beschrieben. Bei Schwingungen des Messrohrs wird die Faser gekrümmt. Mit dem sich ändernden Biegeradius der Faser variiert auch die Stärke des an der Faser ausgekoppelten Lichtstroms, die als Messsignal detektiert wird. Die US 6,722,209 B1 zeigt ein Coriolis-Massendurchflussmessgerät, bei welchem die Messrohrschwingungen mit einem Fabry-Perot-Interferometer erfasst werden. In der US 6,805,013 B2 ist eine Vielzahl physikalischer Prinzipien zur Schwingungsmessung bei Coriolis-Massendurchflussmessgeräten genannt, ohne diese näher zu beschreiben.

Der Erfindung liegt die Aufgabe zugrunde, ein Coriolis-Massendurchflussmessgerät zu schaffen, dessen Schwingungsaufnehmer eine verbesserte Auflösung besitzen und das dennoch mit einem vergleichsweise geringen Herstellungsaufwand verbunden ist.

Zur Lösung dieser Aufgabe weist das neue Coriolis-Massendurchflussmessgerät der eingangs genannten Art die im kennzeichnenden Teil des Anspruchs 1 angegebenen Merkmale auf. In den abhängigen Ansprüchen sind vorteilhafte Weiterbildungen beschrieben.

Das Coriolis-Massendurchflussmessgerät gemäß der vorliegenden Erfindung umfasst somit mindestens ein Messrohr, welches von einem Medium durchströmt wird, mindestens eine Erregeranordnung, welche im mittleren Bereich des mindestens einen Messrohrs angeordnet ist und dieses zu Schwingungen anregt, und eine Auswerteeinrichtung, die eingerichtet ist, um die mindestens eine Erregeranordnung anzusteuern und um Schwingungssignale von den mindestens zwei Schwingungsaufnehmern zu empfangen. Somit wirkt die mindestens eine Erregeranordnung als Aktor, um das mindestens eine Messrohr in Schwingung zu versetzen. Die von den Schwingungsaufnehmern erfassten Schwingungssignale werden dann als Messsignale an die Auswerteeinrichtung weitergegeben. Dabei sind die mindestens zwei Schwingungsaufnehmer in Längsrichtung des mindestens einen Messrohrs vor und hinter der mindestens einen Erregeranordnung angeordnet. Vorzugsweise sind die mindestens zwei Schwingungsaufnehmer symmetrisch angeordnet, so dass sie in Längsrichtung des mindestens einen Messrohrs den gleichen Abstand zur Erregeranordnung haben. Die mindestens zwei optischen Schwingungsaufnehmer besitzen jeweils ein Paar einander überlagerter optischer Raster, die identisch ausgebildet sein können. Aufgrund zueinander korrespondierender periodischer Strukturen der beiden Raster tritt bei deren Durchleuchtung eine positionsabhängige Veränderung der Lichtintensität auf. Bei Schwingen des mindestens einen Messrohrs wird ein durch die Raster tretender Lichtstrom in seiner Intensität mehrfach verändert und man erhält Schwingungssignale mit variabler Frequenz, die im Mittel ein Mehrfaches der Frequenz der mechanischen Schwingungen des Messrohrs ist. Dazu beträgt der Abstand der periodischen Strukturen in den Rastern nur einen Bruchteil der Schwingungsamplitude des mindestens einen Messrohrs. Die Frequenzverhältnisse sind natürlich nicht auf ganzzahlige Faktoren beschränkt.

Zur Erzeugung des Lichtstroms ist selbstverständlich eine Lichtquelle und zum Empfang des durch die Raster beeinflussten Lichtstroms ein Lichtsensor erforderlich. Diese können einander gegenüberliegend, das heißt auf verschiedenen Seiten von den beiden Rastern, oder auf derselben Seite angeordnet sein. Im letzteren Fall befindet sich auf der gegenüberliegenden Seite ein Spiegel und der zurückreflektierte Lichtstrom kann beispielsweise mit Hilfe eines im Strahlengang zwischen der Lichtquelle und den Rastern angeordneten Strahlteilers ausgekoppelt werden. Die Funktion des Spiegels und des diesem benachbarten Rasters kann dabei in einer vereinfachten Ausführung durch einen entsprechend strukturierten Spiegel erfüllt werden. Weiterhin ist es im erstgenannten Fall möglich, die Funktion oder Lichtquelle und des dieser benachbarten Rasters durch geeignete Strukturierung der Lichtaustrittsfläche der Lichtquelle mit einem einzigen Bauelement zu erfüllen, und/oder dass die Funktion des jeweils anderen Rasters durch eine entsprechend strukturierte Lichteintrittsfläche des Lichtsensors übernommen wird.

Gegenüber der herkömmlichen Ausstattung eines Coriolis-Massendurchflussmessgeräts mit Tauchspulen als Schwingungsaufnehmer haben die nun verwendeten optischen Schwingungsaufnehmer den Vorteil, dass sie wesentlich unempfindlicher gegenüber elektromagnetischen Störungen von außen sind und dass sie eine höhere Empfindlichkeit bezüglich der Auslenkung des Messrohrs besitzen. Aufgrund der Veränderung der Lichtintensität mit einer von der momentanen Rohrgeschwindigkeit abhängigen, variablen Frequenz, die im Mittel deutlich höher ist als die Frequenz der Schwingungen des mindestens einen Messrohrs, wird nämlich eine höhere Auflösung bezüglich der Lage des Messrohrs und somit bezüglich der Phasenlage der Messrohrschwingung erreicht. Das neue Coriolis-Massendurchflussmessgerät reagiert zudem schnell auf Veränderungen des Massendurchflusses und aktuelle Messwerte können schneller ermittelt werden. Dies ist insbesondere von Vorteil bei hochdynamischen Dosiervorgängen, in welchen sich der Massendurchfluss sehr schnell verändern kann. Ein weiterer Vorteil ist darin zu sehen, dass sich der Signalstörabstand gegenüber niederfrequenten Prozessschwingungen, welche über Rohrleitungen in das Messgerät eingekoppelt werden können, aufgrund der Verwendung eines Messsignals höherer Frequenz verbessert.

Da es sich um ein berührungsloses Messverfahren handelt, müssen keine Drähte oder Leitungen an dem Messrohr befestigt werden, welche dessen Schwingungen beeinflussen oder sich bei längerer Betriebszeit von diesem lösen könnten. Das optische Raster, welches mit dem mindestens einen Messrohr gekoppelt ist, kann mit sehr geringem Eigengewicht realisiert werden, so dass seine Auswirkungen auf die Schwingungseigenschaften des Messrohrs minimal sind. Vorteilhaft ist weiterhin, dass die optischen Schwingungsaufnehmer mit vergleichsweise kleiner Bauform realisierbar sind und somit auch in Coriolis-Massendurchflussmessgeräten mit kleinem Gehäuse eingesetzt werden können. Insbesondere am Messrohr sind keine größeren Anbauteile erforderlich. Aufgrund der verbesserten Auflösung der Schwingungsaufnehmer kann eine Phasendifferenz auch bei kleineren Schwingungsamplituden detektiert werden. Es ist daher möglich, das Coriolis-Massendurchflussmessgerät mit geringerer Schwingungsamplitude zu betreiben und somit die Leistungsaufnahme der Erregeranordnung zu reduzieren.

Eine besonders deutliche Intensitätsänderung bei Schwingungen und damit eine gute Signalqualität des durch die Raster tretenden Lichtstroms kann erreicht werden, wenn Mittel zur Begrenzung der Strahlaufweitung vor dem Paar einander überlagerter Raster vorgesehen sind. Auf diese Weise kann ein Lichtstrom mit geringer Strahlaufweitung im Wesentlichen senkrecht auf die überlagerten Raster geleitet werden.

Als besonders vorteilhaft hat sich eine Ausführungsform erwiesen, bei welcher die überlagerten Raster durch zwei im Wesentlichen parallel zueinander ausgerichtete optische Liniengitter realisiert sind. Bei senkrecht zur Schwingungsrichtung des mindestens einen Messrohrs verlaufenden Linien können deutliche Helligkeitsschwankungen des transmittierten Lichts detektiert werden. Helligkeitsmodulationen treten als Moire-Effekt beispielsweise auf, wenn die Gitterkonstanten der optischen Liniengitter wenig voneinander abweichen oder wenn Liniengitter mit gleicher Gitterkonstante verwendet werden, die geringfügig gegeneinander verdreht sind. Somit kann auch in diesem Fall die Verschiebung der Raster zueinander mit höherer Genauigkeit bestimmt werden.

Ein Lichtstrom mit geringer Strahlaufweitung kann mit besonders einfachen Mitteln erhalten werden, indem vor den einander überlagerten Rastern eine Aperturblende angeordnet wird.

Zur Leitung des Lichts zu den überlagerten Rastern und zur Erfassung des durch die Raster transmittierten Lichtstromes können in den optischen Schwingungsaufnehmern Lichtleitfasern verwendet werden. In vorteilhafter Weise ist es dadurch möglich, zwei oder mehr optische Schwingungsaufnehmer mit einer einzigen Lichtquelle zu betreiben. Weiterhin hat dies den Vorteil, dass die Lichtquelle und der Lichtempfänger, die vergleichsweise empfindliche Bauteile darstellen, in größerem Abstand vom Messrohr angeordnet werden können. Insbesondere bei einer Anwendung des Massendurchflussmessgeräts bei heißen Prozessmedien wirkt sich dies vorteilhaft auf die Robustheit der Schwingungsaufnehmer aus. Bei einer Verwendung von Lichtleitfasern kann die Aperturblende vor den überlagerten Rastern entfallen, da der Lichtaustrittsquerschnitt der Fasern bereits vergleichsweise klein ist.

Selbstverständlich können die überlagerten optischen Raster periodische Strukturen aufweisen, die nicht nur zueinander korrespondieren, sondern völlig identisch ausgebildet sind. Werden die beiden Raster um ein Maß gegeneinander verschoben, das der Periodizität der Strukturen entspricht, so durchläuft in diesem Fall die Intensität des durch die Raster tretenden Lichtstroms ebenfalls genau eine Periode. Als Lichtempfänger genügt ein einfacher Photodetektor, vor welchem eine Aperturblende angeordnet sein kann. Die räumliche Periodizität der Strukturen wird ein Vielfaches kleiner als die Schwingungsamplitude des mindestens einen Messrohrs gewählt. Auch wenn mehrere schwingende Messrohre in einem Coriolis-Massendurchflussmessgerät zum Einsatz kommen, kann es von Vorteil sein, das jeweils andere Raster der Paare einander überlagerter Raster an einem Rahmen des Coriolis-Massendurchflussmessgeräts zu befestigen. Bei dieser Ausführungsform ist es möglich, für jedes Messrohr getrennte Messwerte seiner Lage gegenüber dem Rahmen des Geräts zu ermitteln. Neben dem eigentlichen Messsignal können somit weitere, beispielsweise zur Diagnose nützliche Informationen über das Messgerät oder den Strömungszustand des Messmediums abgeleitet werden.

Bei Verwendung zumindest eines Paars im Wesentlichen zueinander parallel angeordneter Messrohre, die zum Massenausgleich mit einer um 180° gegeneinander versetzten Phasenlage schwingen, wird jedoch ein besonders einfacher Aufbau der Schwingungsaufnehmer erhalten, wenn das jeweils andere Raster der Paare einander überlagerter Raster an dem jeweils anderen Messrohr des Paares zueinander parallel angeordneter Messrohre befestigt ist. Somit wird eine einfache Substitution der herkömmlichen Schwingungsaufnehmer, die beispielsweise mit den bekannten magnetischen Tauchspulen arbeiten, durch die neuen optischen Schwingungsaufnehmer ermöglicht. Eine derartige Ausführungsform ist mit einem besonders geringen Aufwand verbunden.

Anhand der Zeichnungen, in denen ein Ausführungsbeispiel der Erfindung dargestellt ist, werden im Folgenden Ausgestaltüngen und Vorteile näher erläutert.

Es zeigen:
- Figur 1: ein Ausführungsbeispiel eines Coriolis-Massendurchflussmessgeräts,
- Figur 2: schematisch einen beispielhaften Aufbau eines optischen Schwingungsaufnehmers und
- Figur 3: Zeitverläufe eines Messsignals und einer Rohrlage.

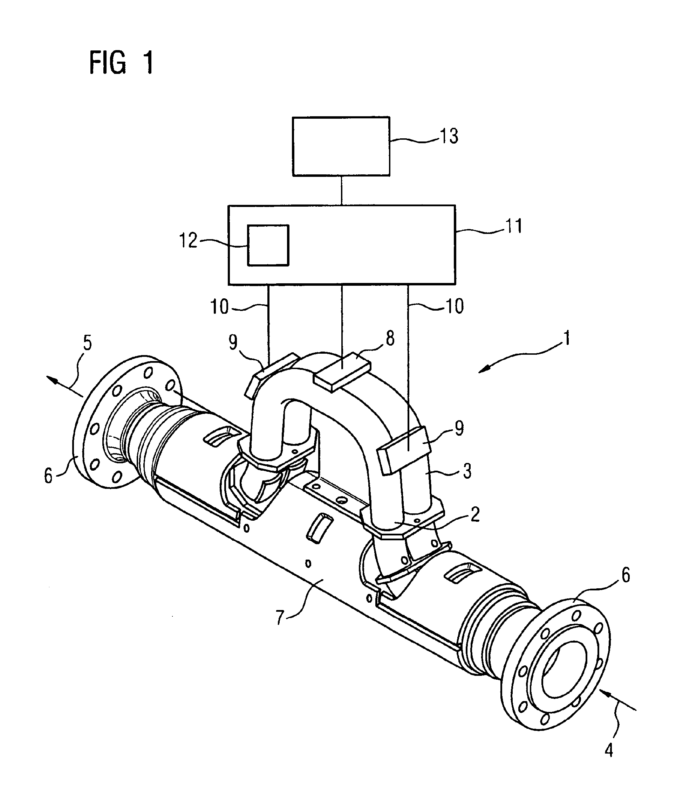

Figur 1 zeigt ein Coriolis-Massendurchflussmessgerät 1 gemäß einem bevorzugten Ausführungsbeispiel der vorliegenden Erfindung. Das Massendurchflussmessgerät 1 besitzt ein erstes Messrohr 2 und ein zweites Messrohr 3, welche im Wesentlichen parallel zueinander angeordnet sind. Diese werden üblicherweise aus einem Stück durch Biegen angefertigt. Der Verlauf der Messrohre 2 und 3 ist im Wesentlichen U-förmig. Ein fließfähiges Medium strömt entsprechend einem Pfeil 4 in das Massendurchflussmessgerät 1 und damit in die beiden hinter einem in der Figur 1 nicht sichtbaren Einlaufsplitter befindlichen Einlaufabschnitte der Messrohre 2 und 3 ein und entsprechend einem Pfeil 5 aus den Auslaufabschnitten und dem dahinter befindlichen, ebenfalls in der Figur 1 nicht sichtbaren Auslaufsplitter wieder aus. Flansche 6, die mit dem Einlaufsplitter bzw. dem Auslaufsplitter fest verbunden sind, dienen zur Befestigung des Massendurchflussmessgeräts 1 in einer in der Figur 1 nicht dargestellten Rohrleitung. Durch einen Versteifungsrahmen 7 wird die Geometrie der Messrohre 2 und 3 weitgehend konstant gehalten, so dass auch Veränderungen des Rohrleitungssystems, in welchem das Massendurchflussmessgerät 1 eingebaut ist, beispielsweise aufgrund von Temperaturschwankungen, allenfalls zu einer geringen Nullpunktverschiebung führen. Eine in Figur 1 schematisch dargestellte Erregeranordnung 8, die beispielsweise aus einer am Messrohr 2 befindlichen Magnetspule und einem am Messrohr 3 angebrachten Magneten, der in die Magnetspule eintaucht, bestehen kann, dient zur Erzeugung einander entgegengesetzter Schwingungen der beiden Messrohre 2 und 3, deren Frequenz der Eigenfrequenz des im Wesentlichen U-förmigen Mittenabschnitts der Messrohre 2 und 3 entspricht.

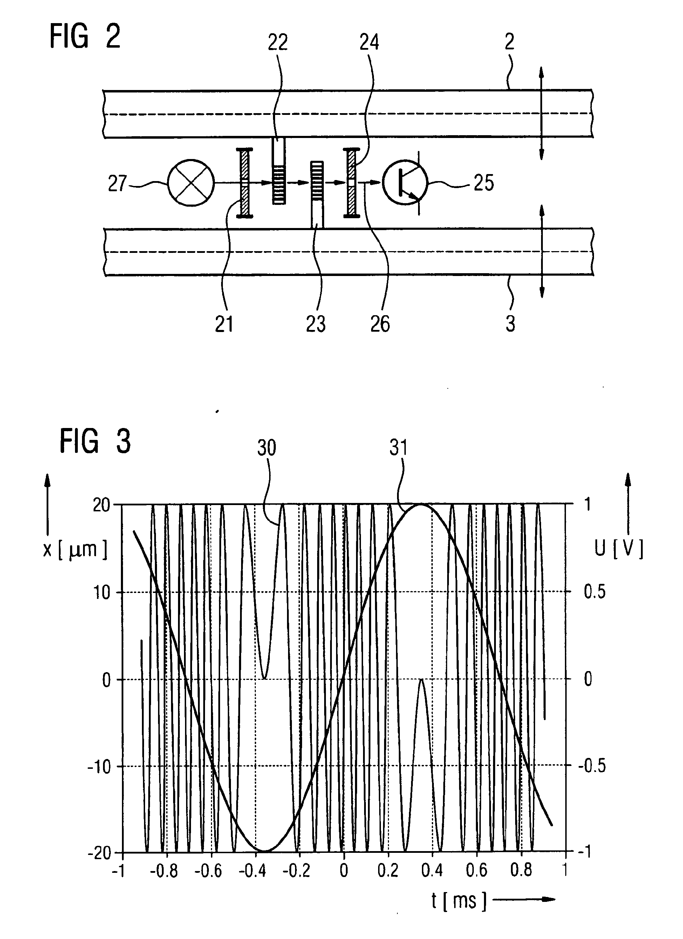

In Figur 1 schematisch dargestellte optische Schwingungsaufnehmer 9 dienen zur Erfassung der Coriolis-Kräfte und/oder der auf den Coriolis-Kräften beruhenden Schwingungen der Messrohre 2 und 3, die aufgrund der Masse des durchströmenden Mediums entstehen. Ein möglicher Aufbau der Schwingungsaufnehmer 9 wird später noch anhand Figur 2 näher erläutert. Die Schwingungssignale 10, welche gemäß Figur 1 durch die Schwingungsaufnehmer 9 erzeugt werden, werden von einer Ansteuer- und Auswerteeinrichtung 11 ausgewertet. Zur Auswertung umfasst die Ansteuer- und Auswerteeinrichtung 11 einen digitalen Signalprozessor 12. Ergebnisse der Auswertung werden auf einer Anzeige 13 ausgegeben oder über einen in der Figur 1 nicht dargestellten Ausgang, zum Beispiel einen Feldbus, an eine übergeordnete Leitstation übertragen. Neben der Auswertung der Schwingungssignale 10 übernimmt die Ansteuer- und Auswerteeinrichtung 11 in dem dargestellten Ausführungsbeispiel auch die Ansteuerung der Erregeranordnung 8.

Abweichend von dem dargestellten Ausführungsbeispiel können die beiden Schwingungsaufnehmer 9, welche hier die relative Lage der Messrohre 2 und 3 zueinander erfassen, alternativ derart ausgestaltet werden, dass jeweils die relative Lage eines Messrohrs 2 oder 3 bezüglich des Versteifungsrahmens 7 erfasst wird. Bei einem Ausführungsbeispiel mit zwei schwingenden Messrohren sind dann jedoch vier optische Schwingungsaufnehmer erforderlich. Weiterhin können abweichend von dem dargestellten Ausführungsbeispiel die Messrohre 2 und 3 selbstverständlich andere Geometrien aufweisen, beispielsweise einen geraden, einen V-förmig oder einen Ω-förmig ausgebildeten Mittenabschnitt, oder es kann eine abweichende Anzahl und Anordnung von Erregeranordnungen und optischen Schwingungsaufnehmern gewählt werden. Das Coriolis-Massendurchflussmessgerät kann alternativ eine andere Anzahl von Messrohren, beispielsweise ein Messrohr oder mehr als zwei Messrohre, besitzen.

In dem Ausführungsbeispiel eines optischen Schwingungsaufnehmers gemäß Figur 2 sind eine erste Aperturblende 21, ein erstes Raster 22 mit periodischen Strukturen, ein zweites Raster 23 ebenfalls mit periodischen Strukturen, eine zweite Aperturblende 24 und ein Photodetektor 25 im Strahlengang eines Lichtstroms 26, der von einer Lichtquelle 27 erzeugt wird, hintereinander angeordnet. Das erste Raster 22 ist am ersten Messrohr 2, das zweite Raster 23 am zweiten Messrohr 3 befestigt. Schwingen die beiden Messrohre 2 und 3 gegeneinander, das heißt mit einer um 180° phasenverschobenen Schwingung, so werden die beiden im Strahlengang einander überlagerten Raster 22 und 23 relativ zueinander verschoben. Die periodischen Strukturen der Raster 22 und 23 sind optische Liniengitter, deren Linien senkrecht zur Zeichnungsebene verlaufen. In dem Ausführungsbeispiel sind die Linien des ersten Rasters 22 parallel zu den Linien des zweiten Rasters 23 ausgerichtet. Der Abstand einander benachbarter Linien ist in den beiden Rastern 22 und 23 gleichgroß. Er ist um ein Vielfaches kleiner als die Schwingungsamplitude der beiden Messrohre 2 und 3, beispielweise um den Faktor 10. Der Abstand ist jedoch so groß gewählt, dass bei der Lichtwellenlänge der Lichtquelle 27 der Einfluss von Lichtbeugungseffekten an den Rastern 22 und 23 auf die Intensität des durch den Photodetektor 25 empfangenen Lichts noch vernachlässigbar ist. Die Lichtquelle 27, die als LED oder Halbleiterlaser ausgeführt sein kann, sendet einen Lichtstrom aus, der durch die erste Aperturblende 21 gebündelt wird. Der Lichtstrom, der auf das erste Raster 22 trifft, hat daher eine geringe Strahlaufweitung. In den lichtdurchlässigen Bereichen des ersten Rasters 22 wird ein Teil des Lichtstroms durchgelassen, so dass dieser auf das dahinter befindliche zweite Raster 23 trifft. Sind die lichtdurchlässigen Bereiche des zweiten Rasters 23 gerade deckungsgleich mit den lichtdurchlässigen Bereichen des Rasters 22, so wird der ankommende Lichtstrom nahezu ungedämpft das zweite Raster 23 passieren. Der an dem Photodetektor 25 ankommende Teil des ursprünglich von der Lichtquelle 27 ausgesendeten Lichtstroms hat dann maximale Intensität. Sind die beiden Raster 22 und 23 dagegen gerade so zueinander positioniert, dass der Lichtstrom, der das erste Raster 22 passiert hat, auf lichtundurchlässige Bereiche des zweiten Rasters 22 trifft, so gelangt nur ein minimaler Teil des Lichtstroms zum Photodetektor 25 und das durch diesen ausgegebene Messsignal hat gerade seinen minimalen Pegel. Da der Abstand der periodischen Strukturen auf den Rastern 22 und 23 wesentlich geringer als die Schwingungsamplitude der beiden Messrohre 2 und 3 gewählt ist, hat der Lichtstrom, der durch den Photodetektor 25 empfangen wird, eine veränderliche Frequenz, die im Mittel ein Vielfaches der Frequenz der Schwingungen der Messrohre 2 und 3 beträgt. Dieser Effekt wird im Folgenden anhand Figur 3 näher erläutert.

In Figur 3 ist ein beispielhafter Verlauf 30 eines Schwingungssignals, das von einem Photodetektor in einem optischen Schwingungsaufnehmer gemäß Figur 2 ausgegeben wird, über der Zeit dargestellt. Auf der Abszisse ist die Zeit t in Millisekunden, auf der linken Ordinate die Rohrlage x in Mikrometer und auf der rechten Ordinate der Spannungspegel U des Schwingungssignals in Volt angegeben. Das mit Hilfe des Photodetektors erzeugte Spannungssignal entspricht der Intensität des auf dem Photodetektor 25 (Figur 2) auftreffenden Lichtstroms 26 (Figur 2). Diese ist bei Schwingungen der Messrohre 2 und 3 (Figur 2) aufgrund der periodischen Strukturen in den Rastern 22 und 23 (Figur 2) von der momentanen Rohrlage abhängig. Zusätzlich zu dem Verlauf 30 des Schwingungssignals ist in Figur 3 ein Verlauf 31 der Rohrlage eingezeichnet. Zur besseren Anschaulichkeit wurden Signalgleichanteile bei den dargestellten Verläufen 30 und 31 entfernt. Bei Verwendung eines optischen Schwingungsaufnehmers, dessen prinzipieller Aufbau anhand Figur 2 näher erläutert wurde, weist der Verlauf 30 des Schwingungssignals eine erheblich höhere Anzahl von Nulldurchgängen auf als der Verlauf 31 der Rohrlage. Im Zeitbereich entsteht somit in vorteilhafter Weise eine wesentlich höhere Detaillierung des Schwingungssignals, die mit dem neuen optischen Schwingungsaufnehmer erreicht wird. Die Umkehrpunkte der Rohrlage, bei welchen die Maximalwerte des Verlaufs 31 erreicht werden, zeichnen sich durch eine lokal minimale Frequenz des Schwingungssignals entsprechend dem Verlauf 30 aus. Bei den Nulldurchgängen des Verlaufs 31, bei welchen die Messrohre sich mit maximaler Geschwindigkeit bewegen, sind gut lokale Maxima der Frequenz des Schwingungssignals erkennbar. Damit ist bei einem Coriolis-Massendurchflussmessgerät, welches mit den neuen optischen Schwingungsaufnehmern ausgestattet ist, neben einer Auswertung der Schwingungssignale im Zeitbereich auch eine Auswertung der Schwingungssignale im Frequenzbereich zur Ermittelung des Massendurchflusses oder der Dichte des Mediums möglich. In einfacher Weise kann anhand des Verlaufs 30 die Grundfrequenz des Verlaufs 31 und damit die Dichte des Mediums und ebenso anhand des Verlaufs 30 und eines weiteren Verlaufs, der von dem zweiten optischen Schwingungsaufnehmer des Coriolis-Massendurchflussmessgeräts aufgenommen wurde, auf die Phasenverschiebung der Schwingungen der beiden Messrohre und damit auch auf den Massendurchfluss geschlossen werden.

Der anhand Figur 2 erläuterte optische Schwingungsaufnehmer kann herkömmliche magnetische Schwingungsaufnehmer mit magnetischen Tauchspulen in besonders einfacher Weise ersetzen. Um eine robuste Ausführung zu erreichen, werden vorzugsweise die Lichtquelle und der Photodetektor am Rahmen des Coriolis-Massendurchflussmessgeräts befestigt. Dadurch müssen keine elektrischen Zuleitungen an den Messrohren angebracht werden. Die Verwendung einer gemeinsamen Lichtquelle für mehrere optische Schwingungsaufnehmer ist möglich, beispielsweise indem das Licht durch Lichtleitfasern den verschiedenen Paaren überlagerter optischer Raster zugeführt wird. Bei einer derartigen Ausgestaltung können die empfindliche Lichtquelle und der Photodetektor in größerer Entfernung von den Messrohren, die unter Umständen eine hohe Temperatur besitzen, angeordnet werden. Dadurch wird die Robustheit des Messgeräts weiter verbessert. Anstelle einer Abstandsmessung der be-iden- Messrohre, wie in Figur 2 gezeigt, kann alternativ die Lageänderung eines Messrohrs gegenüber dem Rahmen des Messgeräts erfasst werden. Dazu wird lediglich ein optisches Raster mit dem jeweiligen Messrohr mechanisch gekoppelt, während das andere optische Raster am Rahmen zu befestigen ist. Damit wird zwar der Aufwand für die Realisierung der optischen Schwingungsaufnehmer erhöht, es können jedoch zusätzliche Informationen über das Messgerät, beispielsweise zur Diagnose nützliche Informationen oder Informationen über den Zustand des Mediums, zum Beispiel zur Detektion einer Mehrphasenströmung, aus den Schwingungssignalen der Aufnehmer abgeleitet werden.

In dem anhand Figur 2 erläuterten Ausführungsbeispiel wurden identische optische Raster in dem Schwingungsaufnehmer verwendet. Alternativ dazu können die optischen Raster geringfügig voneinander abweichen, beispielsweise bezüglich des Abstands der Linien voneinander oder bezüglich der Neigung der Linien, so dass so genannte Moiré-Muster im Lichtstrom hinter dem zweiten optischen Raster entstehen. Obwohl auch in diesem Fall ein Photodetektor als Lichtempfänger verwendbar ist, bietet sich zur Detektion der Moiré-Muster der Einsatz eines Bildsensors an, da auch aus den abgebildeten Mustern eine sehr genaue Bestimmung der relativen Lage der Raster zueinander möglich ist.

Eine Alternative zur direkten Befestigung des ersten optischen Rasters am zumindest einen Messrohr stellt eine mechanische Kopplung über einen Hebelmechanismus oder ein Getriebe dar, so dass die Bewegung des Messrohrs in eine translatorische oder rotatorische Bewegung des optischen Rasters umgesetzt wird.

## Patentansprüche

1. Coriolis-Massendurchflussmessgerät mit mindestens einem Messrohr (2, 3), welches von einem Medium durchströmt wird, mit mindestens einer Erregeranordnung (8), welche im mittleren Bereich des mindestens einen Messrohrs (2, 3) angeordnet ist, um dieses zu Schwingungen anzuregen, mit mindestens zwei optischen Schwingungsaufnehmern (9), welche in Längsrichtung des mindestens einen Messrohrs (2, 3) vor und hinter der mindestens einen Erregeranordnung (8) angeordnet sind, und mit einer Ansteuer- und Auswerteeinrichtung (11), die dazu ausgebildet ist, die mindestens eine Erregeranordnung (8) anzusteuern, Schwingungssignale (10) von den mindestens zwei Schwingungsaufnehmern (9) zu empfangen und anhand dieser den Massendurchfluss und/oder die Dichte des Mediums zu bestimmen, **dadurch gekennzeichnet, dass** die mindestens zwei optischen Schwingungsaufnehmer (9) jeweils ein Paar einander überlagerter Raster (22, 23) mit zueinander korrespondierenden periodischen Strukturen aufweisen, von welchen zumindest eines mit dem mindestens einen Messrohr (2, 3) mechanisch gekoppelt ist, um bei Schwingungen die periodischen Strukturen relativ zueinander zu verschieben, so dass die Intensität eines durch die Raster (22, 23) beeinflussten Lichtstroms (26) eine veränderliche Frequenz besitzt, die im Mittel ein Mehrfaches der Frequenz der Schwingungen des mindestens einen Messrohrs (2, 3) ist.

2. Coriolis-Massendurchflussmessgerät nach Anspruch 1, **dadurch gekennzeichnet, dass** Mittel (21, 27) vorhanden sind zur Erzeugung eines Lichtstroms, der mit geringer Strahlaufweitung im Wesentlichen senkrecht auf die überlagerten Raster (22, 23) geleitet ist.

3. Coriolis-Massendurchflussmessgerät nach Anspruch 1 oder 2, **dadurch gekennzeichnet, dass** die überlagerten Raster (22, 23) im Wesentlichen parallel zueinander ausgerichtete optische Liniengitter sind.

4. Coriolis-Massendurchflussmessgerät nach Anspruch 2 oder 3, **dadurch gekennzeichnet, dass** die Mittel (21, 27) zur Erzeugung des Lichtstroms eine Lichtquelle (27) und eine Aperturblende (21) umfassen, die vor den überlagerten Rastern (22, 23) angeordnet ist.

5. Coriolis-Massendurchflussmessgerät nach einem der vorhergehenden Ansprüche, **dadurch gekennzeichnet, dass** Lichtleitfasern zur Leitung des Lichtstroms zu den überlagerten Rastern und/oder zur Erfassung des durch die Raster transmittierten Lichtstroms vorhanden sind.

6. Coriolis-Massendurchflussmessgerät nach einem der vorhergehenden Ansprüche, **dadurch gekennzeichnet, dass** das jeweils andere Raster der Paare einander überlagerter Raster an einem Rahmen des Coriolis-Massendurchflussmessgeräts befestigt ist.

7. Coriolis-Massendurchflussmessgerät nach einem der Ansprüche 1 bis 5, **dadurch gekennzeichnet, dass** zumindest ein Paar im Wesentlichen zueinander parallel angeordneter Messrohre (2, 3) vorhanden ist, dass das jeweils zumindest eine Raster (22) der Paare einander überlagerter Raster (22, 23) an dem einen Messrohr (2) des Paares zueinander parallel angeordneter Messrohre (2, 3) und dass das jeweils andere Raster (23) der Paare einander überlagerter Raster (22, 23) an dem jeweils anderen Messrohr (3) des Paares zueinander parallel angeordneter Messrohre (2, 3) befestigt ist.

## Claims

1. Coriolis mass flow meter with at least one measuring tube (2, 3), which is flowed through by a medium, with at least one excitation system (8), which is arranged in the middle region of the at least one measuring tube (2, 3) in order to induce it to perform vibrations, with at least two optical vibration pickups (9), which are arranged upstream and downstream of the at least one excitation system (8) in the longitudinal direction of the at least one measuring tube (2, 3), and with an activating and evaluating device (11), which is designed for activating the at least one excitation system (8), for receiving vibration signals (10) from the at least two vibration pickups (9) and for determining on the basis of these the mass flow and/or the density of the medium, **characterized in that** the at least two optical vibration pickups (9) have in each case a pair of superjacent grids (22, 23) with periodic structures corresponding to one another, of which at least one is mechanically coupled to the at least one measuring tube (2, 3) in order, when there are vibrations, to displace the periodic structures in relation to one another, so that the intensity of a luminous flux (26) influenced by the grids (22, 23) has a variable frequency, which on average is a multiple of the frequency of the vibrations of the at least one measuring tube (2, 3).

2. Coriolis mass flow meter according to Claim 1, **characterized in that** means (21, 27) are present for generating a luminous flux, which is directed with little expansion of the beam substantially perpendicularly onto the superjacent grids (22, 23).

3. Coriolis mass flow meter according to Claim 1 or 2, **characterized in that** the superjacent grids (22, 23) are optical line grids aligned substantially parallel to one another.

4. Coriolis mass flow meter according to Claim 2 or 3, **characterized in that** means (21, 27) for generating the luminous flux comprise a light source (27) and an aperture diaphragm (21), which are arranged upstream of the superjacent grids (22, 23).

5. Coriolis mass flow meter according to one of the preceding claims, **characterized in that** light-conducting fibers are present for conducting the luminous flux to the superjacent grids and/or for recording the luminous flux transmitted through the grids.

6. Coriolis mass flow meter according to one of the preceding claims, **characterized in that** the other grid, respectively, of the pairs of superjacent grids is secured to a frame of the Coriolis mass flow meter.

7. Coriolis mass flow meter according to one of Claims 1 to 5, **characterized in that** there is at least one pair of measuring tubes (2, 3) arranged substantially parallel to one another, **in that** the at least one grid (22), respectively, of the pairs of superjacent grids (22, 23) is secured to the one measuring tube (2) of the pair of measuring tubes (2, 3) arranged parallel to one another and **in that** the other grid (23), respectively, of the pairs of superjacent grids (22, 23) is secured to the other measuring tube (3), respectively, of the pair of measuring tubes (2, 3) arranged parallel to one another.

## Revendications

1. Débitmètre à effet Coriolis comprenant au moins un tube ( 2, 3 ) de mesure dans lequel passe un fluide, au moins un excitateur ( 8 ) qui est monté dans la partie médiane du au moins un tube de mesure pour l'exciter en oscillation, au moins deux capteurs ( 9 ) optiques d'oscillation, qui sont montés dans la direction longitudinale du au moins un tube ( 2, 3 ) de mesure devant et derrière le au moins un excitateur ( 8 ) et au moins un dispositif ( 11 ) de commande et d'exploitation qui est constitué pour commander le au moins un excitateur ( 8 ), recevoir des signaux ( 10 ) d'oscillation des au moins deux capteurs ( 9 ) d'oscillation et déterminer au moyen de ceux-ci le débit massique et ou la masse volumique du fluide, **caractérisé en ce que** les au moins deux capteurs ( 9 ) optiques d'oscillation ont respectivement une paire de trames ( 22, 23 ) superposées l'une à l'autre et ayant des structures périodiques se correspondant, dont l'une au moins est couplée mécaniquement au au moins un tube ( 2, 3 ) de mesure pour, s'il se produit des oscillations, décaler les structures périodiques les unes par rapport aux autres de manière à ce que l'intensité d'un courant ( 26 ) lumineux influencé par les trames ( 22, 23 ) ait une fréquence variable, qui est en moyenne un multiple de la fréquence des oscillations du au moins un tube ( 2, 3 ) de mesure.

2. Débitmètre à effet Coriolis suivant la revendication 1, **caractérisé en ce qu'**il y a des moyens ( 21, 27 ) de production d'un flux lumineux qui est envoyé avec peu d'élargissement du faisceau sensiblement perpendiculairement aux trames ( 22, 23 ) superposées.

3. Débitmètre à effet Coriolis suivant la revendication 1 ou 2, **caractérisé en ce que** les trames ( 22, 23 ) superposées sont des réseaux optiques linéaires sensiblement parallèles l'un à l'autre.

4. Débitmètre à effet Coriolis suivant la revendication 2 ou 3, **caractérisé en ce que** les moyens ( 21, 27 ) de production du flux lumineux comprennent une source ( 27 ) lumineuse et un diaphragme ( 21 ) à ouverture qui est placé devant les trames ( 22, 23 ) superposées.

5. Débitmètre à effet Coriolis suivant l'une des revendications précédentes, **caractérisé en ce que** des fibres optiques sont prévues pour conduire le flux lumineux aux trames superposées et/ou pour la détection du flux lumineux transmis par les trames.

6. Débitmètre à effet Coriolis suivant l'une des revendications précédentes, **caractérisé en ce que** l'autre trame des paires de trames superposées est fixée à un cadre du débitmètre à effet Coriolis.

7. Débitmètre à effet Coriolis suivant l'une des revendications 1 à 5, **caractérisé en ce qu'**il y a au moins une paire de tubes ( 2, 3 ) de mesure, montés sensiblement parallèlement l'un à l'autre, **en ce que** respectivement au moins une trame ( 22 ) des paires de trames ( 22, 23 ) superposées l'une à l'autre est fixée à l'un des tubes ( 2 ) de mesure de la paire de tubes ( 2, 3 ) de mesure disposés parallèlement l'un à l'autre et **en ce que** respectivement l'autre trame ( 23 ) des paires de trames ( 22, 23 ) superposées l'une à l'autre est fixée à respectivement l'autre tube ( 3 ) de mesure de la paire de tubes ( 2, 3 ) de mesure disposés parallèlement l'un à l'autre.
